# DEMANDE DE BREVET EUROPEEN

(11) **EP 1 586 869 A1**
(43) Date de publication de la demande: **19.10.2005**
(21) Numéro de dépôt: 05300231.7
(22) Date de dépôt: 30.03.2005
(51) Int. Cl.: G01F 1/075, G01F 15/14

(54) **Agencement destiné à la fixation d'un dispositif sur le capot d'un compteur de fluide**

(30) Priorité: 30.03.2004 FR 0450616
(71) Demandeur: Actaris SAS, 92100 Boulogne Billancourt (FR)
(72) Inventeur: MERCIER, Alcide, 71000, Macon (FR); TALVAT, Jean-Marie, 91620, Nozay (FR)
(74) Mandataire: Lenne, Laurence

(57) **Abrégé**

L'invention concerne un agencement (10) destiné à la fixation d'un dispositif sur le capot (3A) d'un compteur de fluide, par l'intermédiaire d'un élément mâle de fixation associé au dit dispositif, cet agencement comprenant un insert femelle correspondant surmoulé dans ledit capot et destiné à recevoir l'élément mâle et également une partie de protection (11) fermant ledit insert, cette partie de protection étant reliée par au moins une partie sécable au dit capot (3A).

Selon l'invention, ladite partie de protection (11) est une partie mâle insérée dans ledit insert.

## Description

L'invention se rapporte à un agencement destiné à la fixation d'un dispositif sur le capot d'un compteur de fluide, en particulier destiné à la fixation d'un module de télé-relevé sur le couvercle d'un tel compteur.

Elle concerne plus précisément un agencement destiné à la fixation d'un dispositif sur le capot d'un compteur de fluide par l'intermédiaire d'un élément mâle fileté de type vis associé au dit dispositif, cet agencement comprenant un insert femelle taraudé surmoulé dans ledit capot et destiné à recevoir l'élément mâle par vissage.

De façon connue, un tel agencement est constitué d'un insert taraudé surmoulé dans la paroi du capot. Le dispositif destiné à être fi xé sur le capot présente quant à lui un alésage dans lequel est insérée une vis dont l'extrémité est vissée dans cet insert, lors de la fixation de ce dispositif.

Cet agencement de fixation est surmoulé dans la paroi du capot lors de la fabrication de ce dernier et le compteur une fois assemblé sort d'usine ainsi équipé. Le compteur est ensuite installé en fonctionnement dans un lieu généralement soumis à un environnement relativement sale où peuvent être présentes des poussières ou des boues. Lorsque ce dispositif est destiné à être fixé quand le compteur est déjà installé et en fonction éventuellement après un laps de temps relativement long, par exemple plusieurs années, de la poussière et diverses saletés peuvent être introduites dans l'insert et gêner ou même empêcher le vissage de la vis.

Pour résoudre ce problème, il a été réalisé de tels agencements comportant une partie de protection de type opercule fermant l'insert et reliée par au moins une partie sécable au capot. Cependant, un tel opercule est constitué d'un disque relié au capot par au moins deux languettes sécables et il existe une fente entre ce disque et le capot par laquelle peuvent s'introduire des poussières ou saletés. Ce type de partie de protection n'assure donc pas une protection totale.

L'invention résout ce problème et pour ce faire propose un agencement destiné à la fixation d'un dispositif sur le capot d'un compteur de fluide, par l'intermédiaire d'un élément mâle de fixation associé au dit dispositif, cet agencement comprenant un insert femelle correspondant surmoulé dans ledit capot et destiné à recevoir l'élément mâle et également une partie de protection fermant ledit insert, cette partie de protection étant reliée par au moins une partie sécable au dit capot, caractérisé en ce que ladite partie de protection est une partie mâle insérée dans ledit insert.

L'invention présente l'avantage de supprimer tout jeu entre la partie de protection et le capot et ainsi d'être exempte de tout passage de saletés à l'intérieur de l'insert.

Par ailleurs, contrairement à un élément inséré dans l'insert et enlevé lors de la fixation d'un dispositif, l'invention ne comporte pas de pièce séparée nécessitant maintenance et mise en place spécifique.

Selon un mode de réalisation préféré, ledit insert est taraudé et ladite partie de protection est une partie mâle filetée.

De préférence, ladite partie de protection comporte une tête débordant dudit insert et relié par au moins une languette radiale et sécable audit capot.

Et de préférence, ladite tête comporte une fente destinée à permettre sa rotation à l'aide d'un outil.

Très avantageusement, ladite partie de protection est issue du moulage dudit capot.

Un capot avec partie de protection est donc obtenu en tant que pièce finie en sortie de moule.

De préférence, ledit insert est métallique et ledit capot avec ladite partie de protection en matière plastique.

Avantageusement, cet agencement est destiné à la fixation d'un module de télé-relevé sur le capot d'un compteur de fluide.

L'invention concerne également un procédé de fabrication d'un agencement tel que précisé ci-dessus

Ce procédé consiste à disposer dans une première partie de moule ledit insert et à mouler ledit capot avec ladite partie de protection grâce à une seconde partie de moule.

De préférence, ledit insert est emboîté sur une tige de réglage de la longueur de ladite partie de protection.

L'invention est décrite ci-après plus en détail à l'aide de figures ne représentant qu'un mode de réalisation préféré de l'invention.

La figure 1 est une vue de face d'un compteur d'eau équipé d'un agencement conforme à l'invention.

La figure 2 est une vue en perspective d'un agencement conforme à l'invention.

La figure 3 est une vue en coupe de cet agencement.

La figure 4 est une vue en perspective de cet agencement, en cas de fixation d'un dispositif.

La figure 5 est une vue en coupe de cet agencement, après fixation d'un dispositif.

La figure 6 est une vue en coupe d'un moule de fabrication de cet agencement.

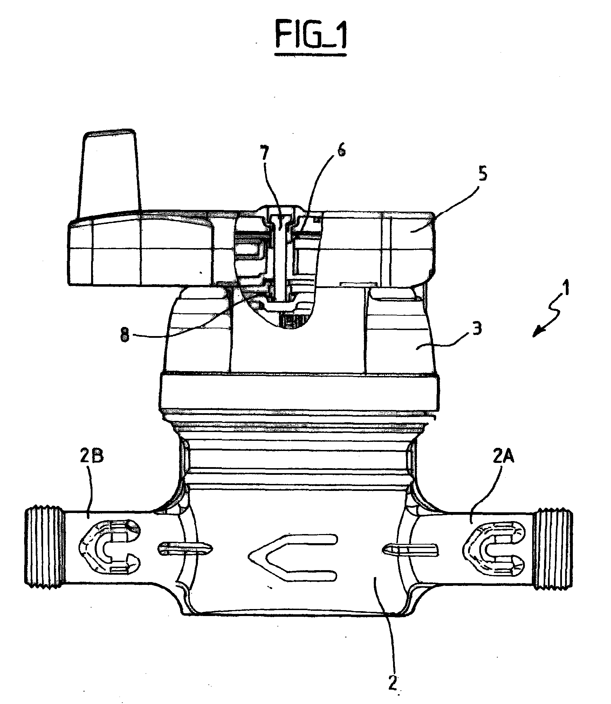

La figure 1 est une vue de face d'un compteur 1 de fluide, plus précisément d'eau, comportant un carter dit bâche 2 pourvu d'une canalisation d'arrivée 2A et une canalisation de sortie 2B de l'eau et surmonté d'un totalisateur 3 contenant un mécanisme de transmission et de réduction de la rotation de l'arbre d'un élément mesurant, tel qu'une turbine ou une chambre volumétrique, contenu dans la bâche 2 vers un dispositif d'affichage de la consommation non visible et un disque indicateur rotatif non visible.

Un module de détection par télé-relevé 5 est posé sur la paroi supérieure du compteur 1 afin de détecter la consommation d'eau ainsi que son sens de circulation. Pour sa fixation, ce module 5 comporte un orifice traversant 6 dans lequel est introduite une vis 7 dont l'extrémité est vissée dans un insert métallique 8 taraudé surmoulé dans le capot du totalisateur 3.

L'invention concerne cet agencement destiné à la fixation d'un dispositif, ici le module 5, sur le capot en matière plastique du compteur de fluide, ici le compteur d'eau 1. Cet agencement est représenté plus en détail sur les figures suivantes.

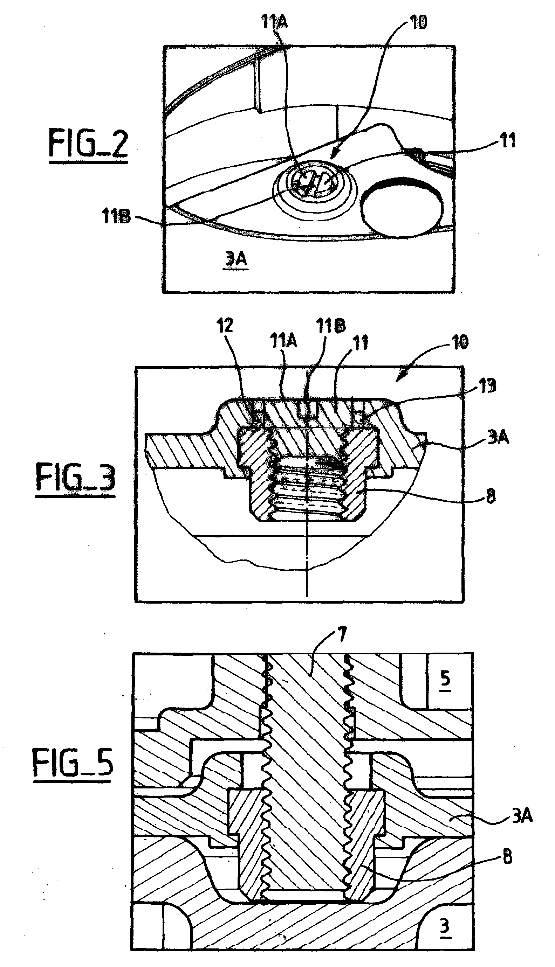

Cet agencement est représenté sur les figures 2 et 3.

Cet agencement 10 comprend l'insert 8 femelle taraudé surmoulé dans le capot 3A et destiné à recevoir la vis 7 par vissage. Il comprend également une partie de protection 11 mâle filetée insérée dans l'insert et fermant ce dernier, cette partie de protection 11 étant reliée par au moins une partie sécable, par exemple deux parties sécables 12, 13, au capot 3A. Cette partie de protection 11 comporte une tête 11 A débordant de l'insert 8 et les parties sécables 12, 13 sont chacune constituées d'une languette radiale. Cette tête comporte une fente 11 B destinée à permettre sa rotation à l'aide d'un outil, par exemple un tournevis robotisé.

Lorsqu'il est souhaité de mettre en place le module 5 sur le capot 3A, un tournevis est introduit dans la fente 11 B et, par rotation, les deux languettes 12, 13 sont cassées et la partie de protection est dévissée de l'insert 8 et totalement enlevée, comme représenté sur la figure 4.

L'insert 8 est alors libéré pour permettre le vissage de la vis 7 de fixation du module. Le module 5 peut alors être posé sur le capot 3A, la vis 7 introduite dans l'orifice 6 et vissée dans l'insert 8, comme représenté sur la figure 5.

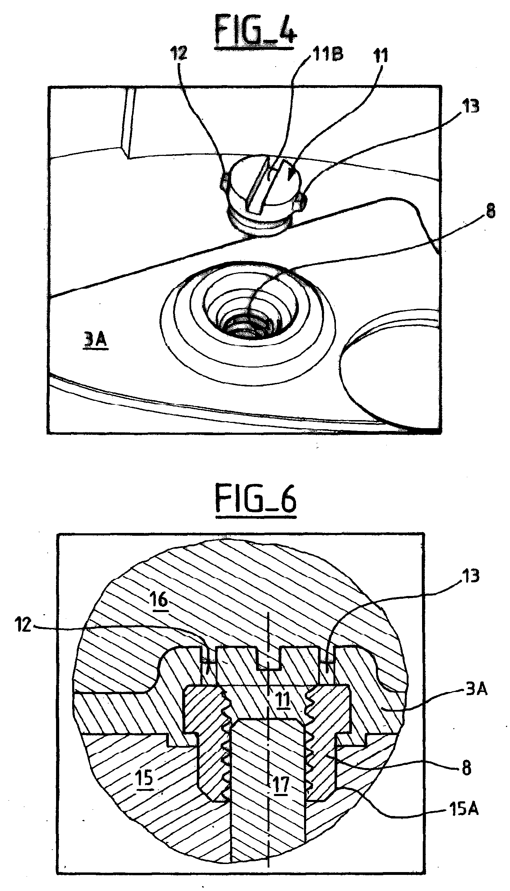

Une caractéristique importante de l'invention concerne le procédé de fabrication de cet agencement 10, particulièrement avantageux. Cette caractéristique consiste en ce que la partie de protection 11 est issue du moulage du capot 3A. Ce procédé est illustré par la figure 6.

Lors du moulage du capot 3A du totalisateur, une première partie de moule 15 maintient l'insert 8 qui est emboîté sur une tige de réglage 17 de la longueur de la partie de protection 11. Avantageusement, la forme externe de l'insert 8 est hexagonale afin d'empêcher sa rotation et il vient prendre place dans un logement 15A de forme correspondante de la première partie de moule 15. Sur cette première partie de moule 15 est disposée une seconde partie de moule 16. Le capot 3A est moulé, par exemple par injection de la matière plastique, entre ces deux parties de moule 15, 16. L'agencement 10 est moulé en même temps que le capot.

Pour ce faire, la seconde partie de moule 16 présente une contre-forme correspondante à la forme externe de la partie de protection 11. Lors de l'injection de la matière plastique, la partie de protection 11 est donc moulée entre l'insert 8 et la seconde partie de moule 16, son filetage étant directement réalisé par moulage sur le taraudage de l'insert. Les deux languettes sécables 12, 13 sont obtenues par moulage dans deux canaux servant également à l'alimentation de la matière plastique vers le centre de l'agencement 10. Par positionnement précis de la tige de réglage 17, est obtenue la longueur de filetage souhaitée de la partie de protection 11.

Le mode de réalisation décrit ci-dessus est un mode de réalisation préféré et l'invention couvre d'autres modes de réalisation équivalents.

Par exemple, au lieu d'utiliser une vis 7, un insert 8 taraudé et une partie de protection 11 filetée, l'agencement peut comprendre une partie de protection insérée dans l'insert et bloquée dans ce dernier par clipsage. Dans ce cas, de préférence, la vis 7 est remplacée par un élément mâle de fixation par clipsage correspondant.

## Revendications

1. Agencement (10) destiné à la fixation d'un dispositif (5) sur le capot (3A) d'un compteur de fluide, par l'intermédiaire d'un élément (7) mâle de fixation associé au dit dispositif, cet agencement comprenant un insert (8) femelle correspondant surmoulé dans ledit capot et destiné à recevoir l'élément mâle et également une partie de protection (11) fermant ledit insert, cette partie de protection étant reliée par au moins une partie sécable (12, 13) au dit capot, **caractérisé en ce que** ladite partie de protection (11) est une partie mâle insérée dans ledit insert (8).

2. Agencement selon la revendication 1, **caractérisé en ce que** ledit insert (8) est taraudé et ladite partie de protection est une partie mâle filetée.

3. Agencement selon la revendication 1 ou 2, **caractérisé en ce que** ladite partie de protection (11) comporte une tête (11 A) débordant dudit insert et relié par au moins une languette (12, 13) radiale et sécable audit capot (3A).

4. Agencement selon l'une des revendications précédentes, **caractérisé en ce que** ladite tête (11 A) comporte une fente (11 B) destinée à permettre sa rotation à l'aide d'un outil.

5. Agencement selon l'une des revendications précédentes, **caractérisé en ce que** ladite partie de protection (11) est issue du moulage dudit capot (3A).

6. Agencement selon l'une des revendications précédentes, **caractérisé en ce que** ledit insert (8) est métallique et ledit capot (3A) avec ladite partie de protection (11) en matière plastique.

7. Agencement destiné à la fixation d'un module de télé-relevé (5) sur le capot (3A) d'un compteur de fluide selon une des revendications 1 à 6.

8. Procédé de fabrication d'un agencement selon l'une des revendications précédentes, **caractérisé en ce qu'**il consiste à disposer dans une première partie de moule (15) ledit insert et à mouler ledit capot avec ladite partie de protection grâce à une seconde partie de moule (16).

9. Procédé selon la revendication 8, **caractérisé en ce que** ledit insert est emboîté sur une tige (17) de réglage de la longueur de ladite partie de protection.
